# EUROPEAN PATENT APPLICATION

(11) **EP 1 906 228 A1**
(43) Date of publication of application: **02.04.2008**
(21) Application number: 06255084.3
(22) Date of filing: 29.09.2006
(51) Int. Cl.: G02F 1/1335

(54) **Display device**

(71) Applicant: BRITISH TELECOMMUNICATIONS public limited company, London EC1A 7AJ (GB)
(72) Inventor: Jordan, James Walter, Suffolk IP1 3SB (GB)
(74) Representative: Chabasseur, Vincent Robert

(57) **Abstract**

The present invention relates to a display device, in particular a display device having a lens arrangement. The display has: a plurality of pixels (12), each pixel (12) being composed of three sub-pixels (14a,14b,14c) and having a plurality of light-generating elements (15a,15b,15c), at least some of the light-generating elements of a given pixel being arranged in use to generate red, green and blue light, and a lens member (16a,16b,16c) formed from a material presenting a different refractive index to light of the different colours, the lens member being arranged to at least partially collimate light (22a,22b,22c) from the light-generating elements. The lens member has a plurality of portions (16a,16b,16c), each portion having a focal length f associated therewith, each portion being arranged to receive a different colour. The portions are preferably formed as a unitary moulding (42) and are shaped such that portions arranged to receive different colours have a different shape, in accordance with the colour of light to be received, so as to eliminate chromatic aberration, and all have the same focal length f, so that the focal point of all lenses, lies on a common plane.

## Description

The present invention relates to a display device, in particular a display device having a lens arrangement.

It is known for a colour image to be generated using the primary colours red, blue and green. The image is formed by a plurality of pixels, each of which includes three sub pixels, each sub pixel being capable of generating varying intensities of red, green and blue light respectively.

With the advancement of display technology, it is possible to produce displays, such as liquid crystal displays, having pixels that are very small and very close together. Such finely pixilated displays, such as those found on hand held devices or small note book computers, have a high resolution and are often used to provide very small characters or other graphic symbols. Often it is tempting for a user to bring the display close to the eyes in order to better distinguish the fine detail displayed. However, this can cause eye strain or blurring.

According to one aspect of the present invention, there is provided a display device having: a plurality of pixels, each pixel having a plurality of light-generating elements, at least some of the light-generating elements of a given pixel being arranged in use to generate light of different colours to one another; and, a lens member formed from a material presenting a different refractive index to light of the different colours, the lens member being arranged to at least partially collimate light from the light-generating elements, wherein the lens member has a plurality of portions, each portion having a focal length associated therewith, each portion being arranged to receive a respective colour, and wherein the portions are shaped such that portions arranged to receive different colours have focal lengths that are substantially matched to one another.

The invention will now be described, by way of example only, and with respect to the following drawings in which:
Figure 1 is a plan view of a display having an array of pixels;
Figure 2 is a cross sectional view of one of the pixels of Figure1;
Figure 3 is a set of ray diagrams;
Figure 4 is a cross sectional view of a lens array suitable for the use of the display of figure 1; and,
Figure 5 is a schematic view of a cross sectional view of the display of Figure 1.

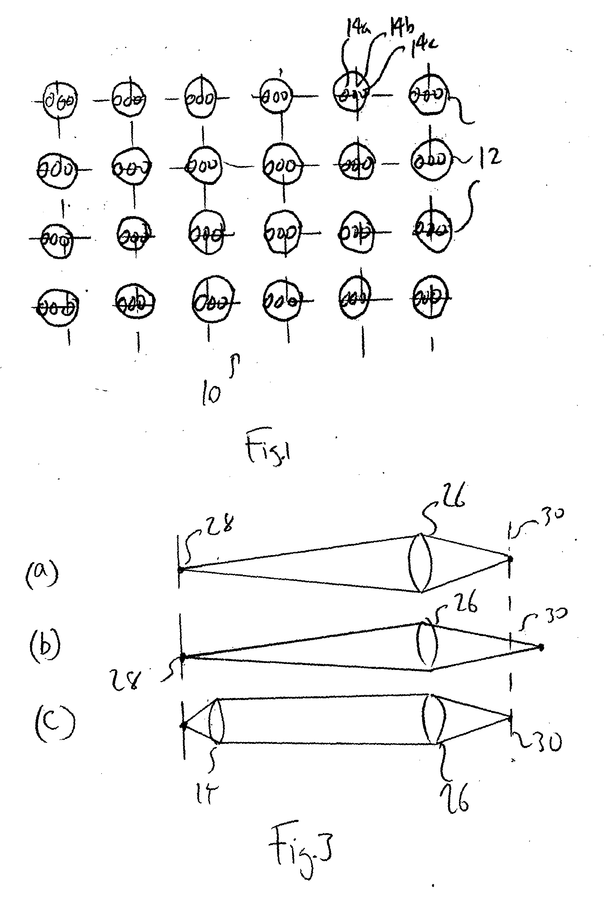

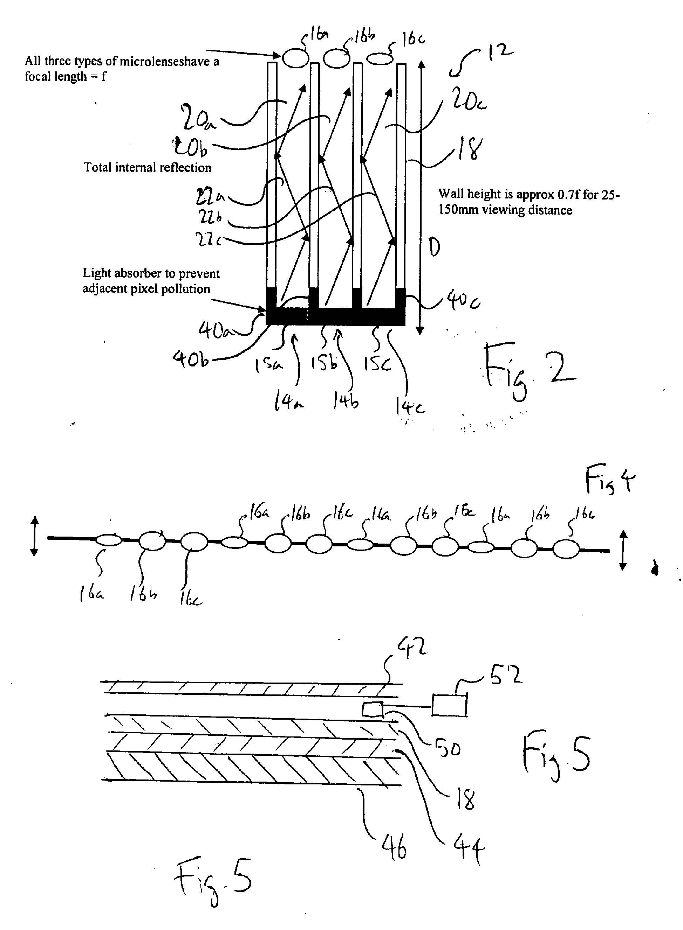

Figure 1 shows a display 10 having a plurality of pixels 12, each of which is composed of a plurality of sub pixels 14a, 14b, 14c. Each sub pixel is configured to provide light of a different respective colour, here red, green and blue. By controlling the relative intensity of light produced by each sub pixel of a given pixel, a range of colours can be achieved for that pixel. A single pixel is shown in cross section in figure 2. Each sub pixel has a light generating element 15a,15b,15c, here a liquid crystal display (LCD) element, for generating red, green and blue light respectively. In front of each LCD element, there is provided a respective lens 16a, 16b, 16c. A spacer 18 is provide between the LCD elements and the lenses, the spacer having a plurality of light guides in the form of bores 20a,20b,20c, one for each LCD element. The LCD elements, the bores and the lenses are in registry with one another such that for a given sub pixel, the light from an LCD element is launched into a bore, and is channelled by the bore to a lens positioned at the exit of the bore.

Because the lenses are formed from a material (in this example Perspex) that is dispersive in the visible part of the spectrum, the refractive index of the lens material will be different for the different colours red, blue and green.

To take into account this difference in refractive index, the lenses of a given pixel will be shaped according to the colour of light which they are to receive. Thus, lenses for the different colours will be shaped differently to one another, the lenses for a given colour but from different pixels having a common shape. In particular, the lenses will be shaped such that their respective focal lengths are substantially matched to one another, to within 10% at least.

In the present example where the display is a planar display, the focal point of the lenses, in particular the focal point of the different lenses of a given pixel, will lie on a common plane.

It has been found that good results are obtained when the focal points of the lenses lie close to the plane in which the light is generated by the LDC elements. Preferably, the separation D between the lenses and the LDC elements is equal to the focal length F of the lenses, to within 10 %, that is D = F +/-10%.

The operation of the lenses can be understood with reference to the ray diagrams of figure 3. Figure 3a shows the situation where the lens of the eye 26 correctly focuses light from an image point 28 onto the retina 30. However, as shown in figure 3b, in situations where the image is too close to the eye, it is possible that the eye will be unable to focus correctly with the result that the eye focuses the incoming light onto a plane that is behind the retina. This results in blurred vision. The effect of the lenses in the present invention is shown in figure 3c. Here, the lens 14 in front of a pixel causes the light from the pixel to be to be at least partially collimated: that is, better collimated than it would be without the lens (by collimated, it is meant that the light travels in a beam whose width remains substantially constant with distance). This makes it easier for the eye to focus the incoming light onto the retina.

The arrangement of figure 3c allows a display to be brought closer to the eye with a reduced likelihood that eye strain or blurring associated with the situation in figure 3b will occur. The ability to bring a display closer to the eye will be particularly useful if the display is finely pixilated, as such displays often display characters or other graphic symbols that are very small, requiring the display to brought closer to the eye.

The dimensions of the lenses as measured in the plane of the display will normally be similar to the dimensions of the sub pixels, which will depend on the type of display. For example, so-called "Head-up" displays, intended to be mounted on a user's head a few centimetres in front of the eye and whose dimensions will typically be about 1 cm by 1 cm, will normally have a sub pixel dimension of about 12-14 microns, and a pixel dimension of 36-42 microns. However, a small hand held display may have sub pixels of about 120-150 microns and pixel dimensions of 360-450 microns, preferably less that 400 microns (sub pixels will normally be rectangular, with an aspect ratio of about 1.5).

Typically, lenses will be useful on displays that are viewed at a distance of about 30cm or less, as at such short distances, it can be difficult for the eye to focus without strain. Therefore, large displays will not normally need lenses , since these will not normally need to be viewed close up. It is expected that lenses will be useful on displays that have an area of up to about 0.1 m².

The choice on focal length for the lenses, which determines their strength, will depend on the viewing angle required. Lenses with a shorter focal length provide a wider viewing angle than lenses with longer focal lengths. Lenses with a focal length as small as 1 mm are envisaged, but typically, focal lengths of around 5mm are preferred (5 mm being the distance D between the lenses 16 and the LDC elements in Figure 2).

The ability to match the lenses for each of the colours red, blue and green will be particularly important for lenses with a short focal length since blurring and fringing effects associated with dispersion are normally more noticeable with such lenses . (It should be noted that a typical hand-held magnifying glass will normally have a focal length of around 50mm).

Returning to figure 2, the respective bores 20a, 20b, 20c into which the LDC elements launch light will be arranged such that light within a bore is guided by the interior walls of the bore through a process of multiple internal reflection, as indicated by the light paths 22a, 22b, 22c. To achieve total internal reflection the light should strike the wall of a bore at a grazing angle of less than about 40 degrees. In order to remove light incident at a larger angle the base 40a, 40b, 40c of each bore is coated with a light absorbent material.

An important result of the guiding effect provided by the bores is that there is a reduced likelihood that light from adjacent sub pixels will mix: that is light will be contained within each respective sub pixel, at least until it is emitted from the light guide (not display). The bores may be formed by the laser drilling of a sheet of Perspex.

Figure 4 is a cross sectional view of an array of lenses formed as a unitary moulding 42, for example from Perspex or other plastics materials. The moulding 42 has thinned regions 43 between the lenses 14a, 14b, 14c, the lenses being formed by thicker regions of moulded material.

Figure 5 is a schematic cross sectional view of the display of figure 1. The display has a base layer 46 on which there is mounted a light-generating layer 44 which includes the LCD elements 15a, 15b, 15c (not shown). The spacer layer 18 (the bores of which are not shown) is mounted between the unitary lens moulding 42 and the light generating layer 44.

The spacer layer 18 includes adjustment means, in this example a Pietzo electric device 50, coupled to an electrical circuit 52, for adjusting the separation between the unitary lens moulding 42 and the light generating layer 44. In the embodiment of figure 5, the Pietzo electric device will include a layer of Pietzo electric material located between the unitary lens moulding 42 and the spacer at 18. However, instead of a Pietzo electric device, a gear mechanism may be used to alter the distance between the lenses and the pixels. Clearly, because the lenses are matched, the distance from the pixels can be adjusted together without the need to adjust the distance of each lens individually, as indicated by the arrow of Figure 4.

The adjustment means 50 will be particularly useful in the case where a pair of displays are provided in a head-up device, one for each eye. The adjustment means can be used to accommodate the difference in eye focusing strength, if any, between the two eyes (in such an arrangement, the head-up device will normally include fastening means to secure the displays to a user head, such that each display is maintained in place in front of each respective eye).

In another embodiment, lenses with a variable focus maybe used. The focus of the lenses may be adjusted such that the focal length of lenses associated with different ones of the different colours red, blue and green each have the same focal length. One example of a variable focus lens is a so-called "liquid lens ", formed by a liquid-liquid interface whose shape can be altered by an electric field applied with a control voltage. The control voltages of the lenses for each of the colours red, blue and green can then be altered so as to retain a common focal length as the focal length of the lenses is changed. The use of variable focus lenses reduces the need for a Pietzo electric adjustment means to adjust the physical spacing between the lenses and the pixels.

Features (some of which are ptional) of the embodiments above can be described further, and with regard to the prior art, as follows below.

Liquid lenses have two immiscible liquids, with different refractive indices. The interface changes in curvature in response to an applied electric field, hence the focal length changes. Liquid lenses can achieve both focussing and zooming functions without mechanically moving parts. Advantages: lack of moving parts, makes for a compact zoom lens. Liquid lens size is may be about 1 mm or less.

Consumer head up displays or HUDs normally use a custom prism lens to achieve the close focus point with best quaility, compact design and minimal colour fringeing compared to using lenses. However prisms suffer from weight disadvantages, rely on good or corrected eyesight and are difficult to use with glasses. Distortion is visible and eye fatigue occurs.

Also, many people experience viewing difficulty or eyestrain when trying to see their phones or pdas in close- up. There is also a trend for higher resolution displays which makes the close focussing problem even more acute. The problem is naturally worse in low light when the iris is fully open and focussing is more critical.

Thus, the above embodiments use microlenses, positioned above the individual [RGB] sub - pixels of LCD displays, to enable close focussing or reduce / eliminate eyestrain. This is in contrast to the use of microlenses positioned over pixels or groups of pixels (RGB arrays), which would exhibit chromatic aberrations if single element lenses were used. In the above embodiment it is recognised that microlenses for red, green and blue pixels need to be matched for focal length. Matching for focal length reduces chromatic aberrations and enables refocussing of an entire display array. Furtermore, the above embodiments may further help to achieve a lighter display.

At least some of the above embodiments are also applicable to the re-focussing of close to eye stereo vision or 3D displays, in which case these could correct for some eye focus imbalance in the users' eyes or existing eye prescription (since two displays are being used).

In Figure 2, one way to provide total internal reflection internal reflection would be to coat the lowest area of each bore with roughened black coating. Another example would be to coat the lower inside part of a red light guide with green and blue filter layers, green with red and blue filter layers, and blue with green and red filter layers. An alternative could be a silvered coating inside the entire length of the light guide. This would have the advantage of being the same for all light guides. A further alternative would be to provide a light absorber at each end of each bore to improve the collimation effect. (by limiting extreme angle rays)

Arrays of high power lenses are positioned over a colour [LCD] display and enable the display to be clearly seen at a distance to suit the viewer with improved clarity. If twin displays are used then potential exists for vision to be better balanced for individual eyes. The embodiment may result in reduced eye fatigue.

Physically, the lenses are positioned over each display sub-pixel and the light from emitted each sub-pixel to its lens is isolated from its neighbours by using total internal refection in a thin walled plastic/glass column. Lenses can be of fixed shape and customised to have the same equivalent focal lengths for red, blue or green sub-pixels, or the lenses could be liquid lenses and set to different focal lengths depending on whether they are refocussing red, green or blue light.

The use of matched focal lengths for the RGB sub pixes can facilitate the use of simple lenses (versus compound lenses), facilitate common control adjustments, and reduce chromatic aberration errors. The potential also exists to automatically compensate focussing for changes in eye distance.

Thus, the general optical principle of air separated lenses is applied to changing the effective near point of the eye.

## Claims

1. A display having: a plurality of pixels, each pixel having a plurality of light-generating elements, at least some of the light-generating elements of a given pixel being arranged in use to generate light of different colours to one another; and, a lens member formed from a material presenting a different refractive index to light of the different colours, the lens member being arranged to at least partially collimate light from the light-generating elements, wherein the lens member has a plurality of portions, each portion having a focal length associated therewith, each portion being arranged to receive a respective colour, and wherein the portions are shaped such that portions arranged to receive different colours have focal lengths that are substantially matched to one another.

2. A display as claimed in claim 1, wherein the portions are each arranged to individually collimate light.

3. A display as claim in claim 1 or claim 2, wherein the portions are arranged in a two dimensional array.

4. A display as claimed in any of the preceding claims, wherein each portion is a convex lens.

5. A display as claimed in any of the preceding claims, wherein each portion is formed by a liquid-liquid interface.

6. A display as claimed in any of the preceding claims, wherein the lens member is formed as a unitary moulding.

7. A display as claimed in any of the preceding claims, wherein the lens member is arranged in a spaced apart relationship to the light-generating elements.

8. A display as claimed in any of the preceding claims, wherein the light-generating elements of a given pixel are each arranged to generate light of a respective one of the colours red, blue and green.

9. A display as claimed in any of the preceding claims, wherein the focal length of the portions is at least 5mm.

10. A display as claimed in any of the preceding claims, wherein the pixels are arranged in a two dimensional array having a pitch in one direction of 400 microns or less.
